Europäisches Patentamt

European Patent Office

Office européen des brevets

(11) Publication number: **0 469 192 A1**

## EUROPEAN PATENT APPLICATION

(21) Application number: 90202079.1

(22) Date of filing: 31.07.90

(51) Int. Cl.⁵: **A01K 5/02**

(43) Date of publication of application:
**05.02.92 Bulletin 92/06**

(84) Designated Contracting States:
**BE DE DK ES FR IT NL**

(71) Applicant: **KUNSTSTOFFENBEDRIJF AZER B.V.**
**Kelperweg 26**
**NL-6037 RM Kelpen(NL)**

(72) Inventor: **Vermulm, Leendert Willem**
**Kelperweg 26**
**6037 RM Kelpen(NL)**

(74) Representative: **de Wit, Gerard Frederik, Ir. et al**
**Octrooi- en Merkenbureau De Wit B.V.**
**Breitnerlaan 146**
**NL-2596 HG Den Haag(NL)**

(54) **Livestock fodder store-container operable by the livestock.**

(57) Dosage device for hog's (11) fodder, provided with a storage room having at its lower side a valve member (4,8,6) operable by the hogs (11), wherewith according to the invention the valve member has at its upper and lower side a truncated cone (4,6) diverging from the centre, which in rest position with its upper side rests on a ring-shaped edge (3) and in lifted position engages with its lower side a further ring shaped edge (7), but further is completely freely movable.

FIG. 1

The invention relates to a livestock fodder store-container with a store-room and a discharge mechanism operable by the livestock for discharging the fodder from the store-container till withthin the reach of the livestock.

Such a livestock fodder store-container has the disadvantage, that the discharge member up till now has been realized in such a way, that it does not continue to work reliable and especially the danger existed that it jammed more or less.

Now the invention aims to provide a livestock fodder store-container of the above sketched type, wherewith the discharge mechanism has a high working reliability and jamming is excluded.

Therefor the invention provides that the discharge mechanism contains an upper opening with a sealing edge and a closure member movable up and down with said opening having a portion tapered towards the lower side, which closure member has a portion by means of which it can be pressed upwardly by the livestock.

It is remarked that herewith a practically never failing opening of the closure member is obtained, wherewith the fodder, which may be as well in the form of meal as in that of pellets, always may stream easily along and that so-called bridge-forming does not occur in practice, because the livestock self will move the uplifting member such, that again a downwardly directed material current will occur.

Though such livestock fodder store-containers are designed especially for hogs it will be clear, that they can be used for any animal which can be taught to exert a force at any place, which, as is known, holds for almost all types of livestock.

Therewith the inflow can be controlled by the animal himself and in a way known per se the animal may be enabled to actuate a water nipple and to mix the meal with the water to pulp.

Because herewith the possibility exists that too much fodder streams downwardly according a further elaboration of the invention it is preferably provided that the closure member further at its lower side has a second portion, which downwardly is enlarged and can be pressed upwardly by the livestock, which second portion can cooperate with an edge of a second closable opening which is located at the lower side of a tube stub joining the edge of the first opening.

It has appeared that the simplest cross-section form of the portions of the closure member cooperating with the openings, namely the form of a truncated cone, in practice does very well. It has appeared that the fodder easily slides downwardly along the truncated cone wall and that no jammings occur, neither in the upper part nor in the lower part. Consequently the closure member gets a diabolic shape.

It may be desired to be able to adjust the lifting height of the valve formed by the several portions and openings. Especially this may be useful in view of the streaming properties of the fodder, which for instance may differ for meal and pellets. Accordingly a further elaboration of the invention provides that the distance between both portions of the closure member is adjustable.

A simple embodiment which in practice has shown to be completely reliable, the cost-price of which is relatively low and wherewith an excellent robustness is obtained consists in that it is composed of a cylindrical wall in which a mainly obliquely oriented baffle has been mounted, which at its lower side has an almost horizontal bottom portion in which the upper opening is located.

Therewith it is preferably provided that spaced somewhat below the discharge mechanism a pulp disk is mounted above which a liquid nipple is located operable by the livestock, wherewith in the cylindrical wall a wide opening is present, located at the side turned away from the discharge mechanism. Practice has shown, that the animals not only prepare their own pulp, but moreover use less water than in the case with other automatic fodder and water suppliers without any animal getting too less water or fodder. By reason hereof a reduction of the used quantity of water is possible as has been shown experimentally, which enables a dry substance content of about 15% for hog's manure, which in practice means a volume reduction of the manure with about 6%.

Further it has appeared that with the inventive fodder store-container a higher yield of pork is obtained per unit of fodder. This probably is due to the fact, that during the whole day or at least a considerable part of the day each animal can eat when and as much as he desires, with always the minimum water content, which each animal adjusts for himself. It is meant that herewith also the emotional burden of hogs, which may be strongly related to simultaneously feeding of all animals in a sty, may be reduced considerably.

Nevertheless with the invention is attained that the quantity of fodder which the combined hogs of a sty obtain,is limited because the container receives each time a metered quantity of fodder.

The invention in the following is further elucidated on hand of the drawing, in which

Figure 1 shows schematically a cross-section through an embodiment of the invention; and

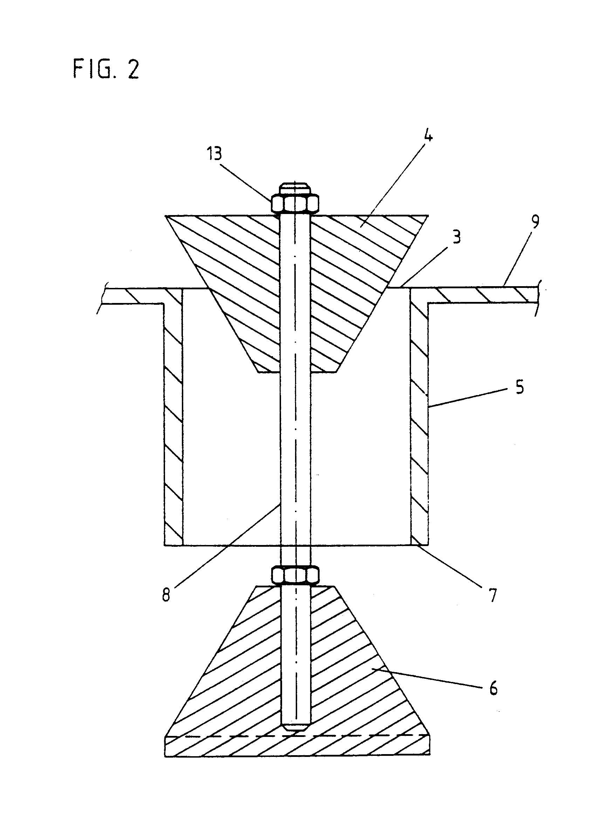

Figure 2 shows a cross-section through a closure member on an enlarged scale.

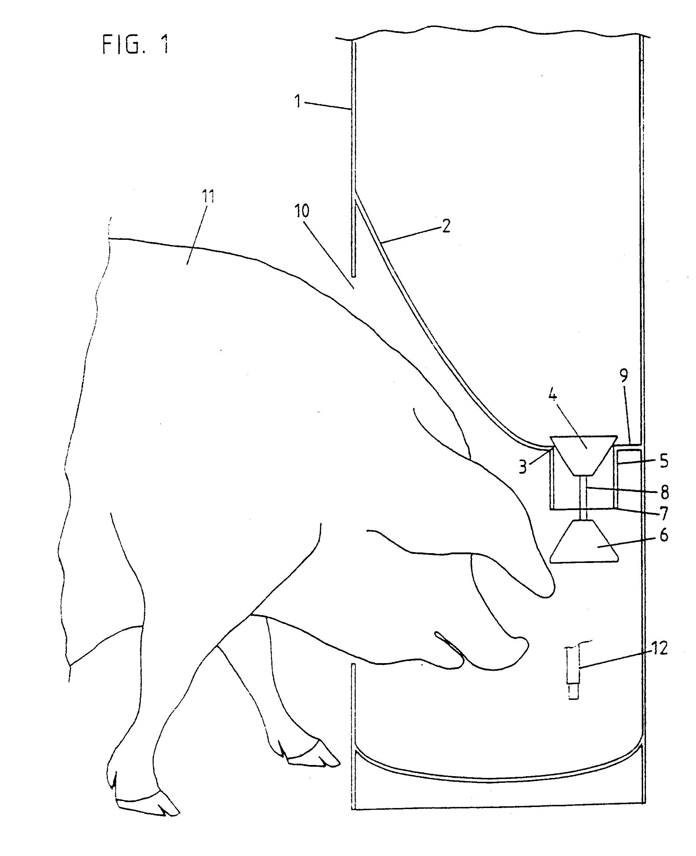

In fig. 1 with 1 a sheath has been indicated preferably of a suitable plastic, such as hard PVC, which in the case in question has a circular cross-section, but of course may have each desired cross-sectional form.

In the sheath wall 1 a baffle 2 has been mounted, which at its lower side has a relatively narrow horizontal portion 9 in which an opening 3 has been made. The latter is circular and has an edge which can form a seal in cooperation with a truncated conical portion 4, which is part of a diabolically shaped closure member which contains further a central rod 8 and a lower truncated conical portion 6. A tube stub 5 joins the opening 3 in downwardly direction. If now an animal moves the truncated cone portion 6 upwardly the portion 4 is lifted above the opening 3 and fodder may flow into the tube stub 5. Generally an animal is, however, inclined to continue the movement so far, that practically in the same moment the truncated conical portion 6 cooperates with the lower edge 7 of the tube stub 5. Only when the portion can again move downwardly the content of the tube stub 5 can flow downwardly and come in the pulp dish. The animal may activate the water nipple 12 and stirrs the meal and/or the pellets to a pulp in the pulp dish, wherewith the fodder by reason of the shape of the dish always lays in the centre.

The animal, schematically indicated with 11, can shove its head through the opening 10 and then firstly bring the fodder down, mix it with water and finally eat it. Generally hogs in a group have an hiierarchical order, determing which animal may eat first. Practice is, however, after all animals in a sty, for instance ten in number, have eaten, the silo is not yet empty so that each animal may consume a further meal. Control of the total quantity fodder consumed by the hogs in a sty, is determined by the quantity of fodder supplied to the store-container above the baffle 2.

The inventive construction has no pivoting parts and also the stream of fodder practically cannot be interrupted. In first instance the fodder streams easily along the oblique walls of the upper portion 4 and/or the lower portion 6 of the closure member and in second instance a bridge formed of fodder between the cylindrical wall 1 and the oblique baffle 2 would be disturbed by moving up and down of the closure member 4,8,6.

To enable adjustment to the streaming properties of the fodder, for instance the difference between meal and pellets, but also adaption to different types of meal is possible, the distance between the truncated conical portions 4 and 6 is adjustable, for instance by providing the central member 8 with screw thread, which cooperates with a srew bore in the portions 4 and 6 and possibly can be fixed by means of a counter mutter 13. When the portions 4 and 6 are made of plastic and the rod 8 of stainless steel such a security is superfluous, as experience has shown with a screw connection between the portion 4 or 6 and the rod 8.

As from the above description is clear, the livestock fodder store-container according to the invention has no pivoting parts or vulnerable mechanisms. The closure member is very robust and will always come in its correct position by the streaming of the fodder.

The individual fodder providing for each animal has, as experience has shown, led to as well a relatively stress-poor situation of the animal with respect to feeding and moreover to a small use of water, which, however, never is too small, because it can be adjusted by the animal himself. By reason hereof the invention not only provides a reliable automatic livestock fodder store-container, but also a possibility to improve the results of fettening of hogs as well with respect to the yield as with respect to the manure volume with making more agreeable the wellfare of the individual animals with respect to their feeding.

## Claims

1. Livestock fodder store-container with a store-room and a discharge mechanism operable by the livestock for discharging the fodder from the store-container till within the reach of the livestock, characterized in that the discharge mechanism contains an upper opening (3) with a sealing edge and a closure member (4,8,6) movable up and down within said opening having a portion (4) tapered towards the lower side, which closure member has a portion (6) by means of which it can be pressed upwardly by the livestock.

2. Livestock fodder store-container according to claim 1, characterized in that the closure member (4,8,6) further at its lower side has a second portion (6), which downwardly is enlarged and can be pressed upwardly by the livestock, which second portion (6) can cooperate with an edge of a second closable opening (7) which is located at the lower side of a tube stub (5) joining the edge of the first opening (3),

3. Livestock fodder store-container according to claim 1 or 2, characterized in that the openings are circular and that both portions are truncated and connected to each other by means of central rod, so that a diabolic closure member is formed.

4. Store-container according to claim 3, characterized in that the distance between both portions(4,6) of the closure member is adjustable.

5. Store-container according to one or more of the preceding claims, characterized in that it is composed of a cylindrical wall in which a mainly obliquely oriented baffle (2) has been mounted, which at its lower side has an almost horizontal bottom portion (9) in which the upper opening (3) is located.

6. Store-container according to claim 5, characterized in that spaced somewhat below the discharge mechanism a pulp disc is mounted above which a liquid nipple (12) is located operable by the livestock, wherewith in the cylindrical wall a wide opening (10) is present, located at the side turned away from the discharge mechanism.

7. Store-container according to claim 5 or 6, characterized in that the baffle except in the immediate neighbourhood of the upper opening includes an angle with the vertical, which is steeper than 45°.

FIG. 1

FIG. 2

European
Patent Office

EUROPEAN SEARCH
REPORT

Application Number

EP 90 20 2079

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| E | NL-A-8 900 054   (KUNSTSTOFFENBEDRIJF AZER B.V.)<br>* the whole document * | 1-7 | A 01 K 5/02 |
| X,A | NL-A-8 802 062   (DE GRAAF)<br>* page 5, lines 21 - 34; figure 1 * | 1,4,5,7 | |
| X | DD-A-223 621   (FORSCHUNGSZENTRUM FÜR TIER PRO-DUKTION)<br>* page 7, paragraph 4 - page 9, paragraph 2; figure 5 * | 1 | |
| A | DEUTSCHE AGRARTECHNIK. vol. 18, no. 7, 01 July 1968, BERLIN DD pages 326 - 326; "KINEMATISCHE SCHEMATA VON DOZIERPRINZIPIEN FÜR DIE KRAFT-FUTTERDOSIERUNG INSTATIONÄREN ANLAGEN"<br>* page 326; figure Q * | 1-3 | |
| A | EP-A-0 293 520   (BAKKER)<br>* abstract; figures 1-3 * | 1-3 | |
| A | DE-A-2 750 163   (DECKER) | | |
| A | NL-A-6 918 652   (FIRMA SÜDDEUTSCHER STALLEIN-RICHTUNGSBAU HERMANN DICKOW) | | |

TECHNICAL FIELDS
SEARCHED (Int. Cl.5)

A 01 K

The present search report has been drawn up for all claims

| Place of search | Date of completion of search | Examiner |
|---|---|---|
| The Hague | 20 March 91 | VON ARX V.U. |